# FASCICULE DE BREVET EUROPEEN

(11) **EP 2 286 289 B1**
(45) Date de publication et mention de la délivrance du brevet: **12.11.2014**
(21) Numéro de dépôt: 09761924.1
(22) Date de dépôt: 05.06.2009
(51) Int. Cl.: G02B 6/126, G02B 6/30

(54) **DISPOSITIF DE COUPLAGE ENTRE UNE FIBRE OPTIQUE ET UN COMPOSANT NANOPHOTONIQUE**
VORRICHTUNG ZUM KUPPELN EINER GLASFASER UND EINER NANOPHOTONISCHEN KOMPONENTE
DEVICE FOR COUPLING AN OPTICAL FIBRE AND A NANOPHOTONIC COMPONENT

(30) Priorité: 12.06.2008 FR 0853895
(43) Date de publication de la demande: 23.02.2011
(73) Titulaire: Commissariat à l'Énergie Atomique et aux Énergies Alternatives, 75015 Paris (FR)
(72) Inventeur: KOPP, Christophe, F-38120 Fontanil-Cornillon (FR); BEN BAKIR, Badhise, F-38000 Grenoble (FR); BERNABE, Stéphane, F-38430 Moirans (FR)
(74) Mandataire: de Beaumont, Michel
(86) Numéro de dépôt international: PCT/FR2009/051069
(87) Numéro de publication internationale: WO 2009/150373

(56) Documents cités:
- US-A1- 2004 184 156
- YONGBO TANG ET AL: "Proposal for a Grating Waveguide Serving as Both a Polarization Splitter and an Efficient Coupler for Silicon-on-Insulator Nanophotonic Circuits" IEEE PHOTONICS TECHNOLOGY LETTERS, IEEE SERVICE CENTER, PISCATAWAY, NJ, US, vol. 21, no. 4, 15 février 2009 (2009-02-15), pages 242-244, XP011241116 ISSN: 1041-1135
- WIM BOGAERTS ET AL: "Silicon-on -insulator nanophotonics" PROCEEDINGS OF THE SPIE - THE INTERNATIONAL SOCIETY FOR OPTICAL ENGINEERING, SPIE, US, vol. 5956, no. 1, 16 septembre 2005 (2005-09-16), pages 1-15, XP002488407 ISSN: 0277-786X cité dans la demande

## Description

### Domaine de l'invention

La présente invention concerne des composants optiques intégrés et, plus particulièrement, un dispositif de couplage entre une fibre optique et un composant nanophotonique.

### Exposé de l'art antérieur

Les composants optiques intégrés sont de plus en plus utilisés dans le domaine des télécommunications, notamment pour la transmission, le traitement et/ou le stockage de données. Les composants optiques intégrés peuvent avoir de nombreuses fonctions, par exemple d'émission, de réception, de multiplexage, de démultiplexage, de modulation, de démodulation, de routage spectral, d'amplification, d'accumulation, de filtrage, de résonateur...

Les composants optiques ou optoélectroniques intégrés sont généralement formés sur et dans des plaquettes semiconductrices similaires à celles utilisées en microélectronique. Un circuit optique intégré comprend un ou plusieurs composants optiques élémentaires réalisant un traitement sur un ou plusieurs faisceaux lumineux. Les faisceaux lumineux sont acheminés entre les composants optiques élémentaires par des guides d'ondes optiques.

L'intégration de plus en plus de fonctions sur une même puce nécessite une miniaturisation des composants optiques intégrés, et donc une miniaturisation des guides d'ondes optiques. Lorsque les guides d'ondes utilisés ont des dimensions inférieures au micromètre, on parle de composant nanophotonique.

On considérera ici des composants nanophotoniques comprenant des guides d'ondes ayant, par exemple, des sections de 0,2 x 0, 5 µm². De tels guides d'ondes ont généralement l'inconvénient de n'être optimisés et fonctionnels que pour des ondes dont la polarisation est parallèle au plan du support sur lequel est formé le guide d'ondes. On appelle de telles ondes des ondes de polarisation transverse électrique, ou de polarisation "TE".

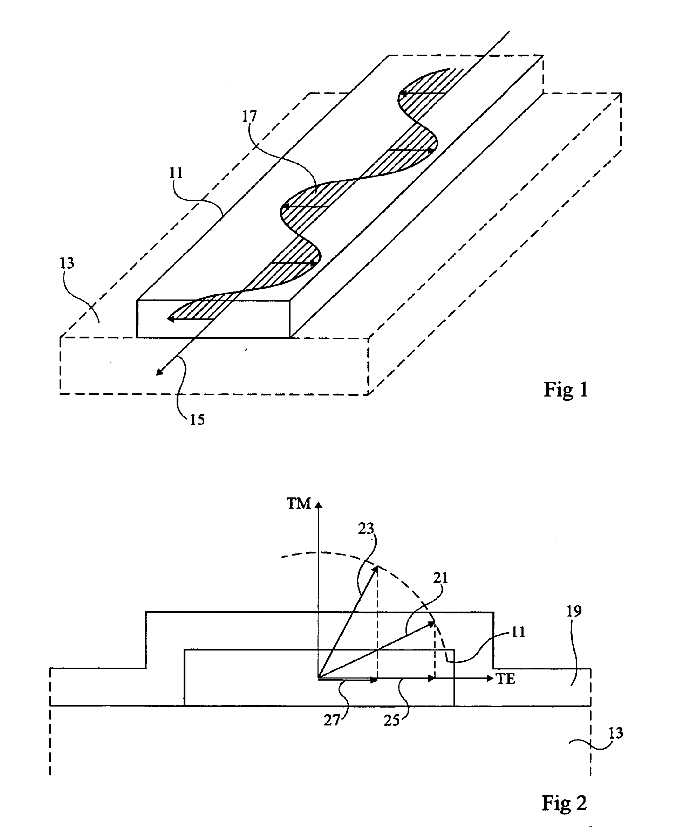

La figure 1 représente un exemple d'un guide d'ondes nanophotonique à section rectangulaire et illustre la propagation d'une onde lumineuse de polarisation TE dans ce guide d'ondes.

Le guide d'ondes représenté est constitué d'une bande de silicium 11 qui s'étend sur un support isolant 13, par exemple en oxyde de silicium. Un revêtement mono ou multicouche, non représenté, est formé sur la bande de silicium 11 de façon à assurer la propagation des ondes lumineuses dans la bande de silicium 11. Dans la direction de propagation de la lumière, représentée par une flèche 15, on a représenté la propagation d'une onde lumineuse 17 de polarisation TE, dans le plan principal du guide d'ondes.

Dans un guide d'ondes nanophotonique tel que celui de la figure 1, des ondes de polarisation perpendiculaire au plan principal du guide d'ondes, appelées ondes de polarisation transverse magnétique, ou de polarisation "TM", sont fortement atténuées.

Pour des applications moyenne et longue distance, le moyen de transport optique préféré est la fibre optique. Un type classique de fibre optique est constitué d'un coeur central entouré d'une gaine, le coeur ayant un indice de réfraction légèrement plus élevé que celui de la gaine. Ceci permet de confiner la lumière dans le coeur de la fibre optique. La gaine de la fibre est généralement recouverte d'une protection plastique. Le coeur des fibres optiques a un diamètre au moins égal à la longueur d'ondes dans le coeur du signal lumineux que l'on veut transmettre, par exemple de l'ordre de 3 à 10 µm pour le proche infrarouge. Ainsi, lorsque l'on veut coupler une fibre optique à un guide d'ondes d'un composant nanophotonique, un premier problème vient de l'adaptation en taille entre la fibre optique et le guide d'ondes.

De plus, dans une fibre optique, l'état de polarisation d'un faisceau lumineux est inconnu et instable. En effet, la polarisation d'un faisceau lumineux varie généralement le long de la fibre optique. De plus, de nombreux facteurs, tels que la température, provoquent une variation supplémentaire et en pratique imprévisible de la polarisation du faisceau dans la fibre optique.

La figure 2 est une vue de face du guide d'ondes nanophotonique de la figure 1 formé sur un support isolant 13. Sur le dessus du coeur du guide d'ondes nanophotonique 11 est formée une couche ou un ensemble de couches 19 permettant le confinement du faisceau lumineux dans ce guide d'ondes.

En figure 2, on a représenté deux exemples de vecteurs d'ondes de même intensité mais de polarisations différentes provenant d'une fibre optique et arrivant en entrée du guide d'ondes 11. Les premier et second signaux lumineux 21 et 23 ont, respectivement, une polarisation dont la direction est sensiblement à 30° par rapport au plan du support 13 et une polarisation dont la direction est sensiblement à 60° par rapport au plan du support 13. Lorsqu'un signal de polarisation 21 ou 23 arrive en entrée du guide d'ondes 11, seule la composante de polarisation TE de ce signal est particulièrement transmise par le guide d'ondes, par rapport à la composante TM. Ainsi, le signal transmis par le guide d'ondes n'est pas représentatif de l'intensité du signal reçu. Si on veut retrouver l'intensité du signal fourni par la fibre, il faut tenir compte non seulement de la composante TE mais aussi de la composante TM.

On connaît divers dispositifs de couplage entre une fibre optique et des composants nanophotoniques qui tiennent compte des composantes TE et TM de l'intensité lumineuse incidente. Notamment, la publication intitulée "Silicon-on-insulator nanophotonic", de Wim Bogaerts et al., SPIE Optics and Optoelectronics, 5956, Poland, p. 5956R-1-15 (2005), propose de positionner une fibre optique perpendiculairement à la surface d'un composant nanophotonique, au niveau d'un réseau bidimensionnel formé en surface du composant nanophotonique. Le réseau bidimensionnel est associé à deux guides d'ondes nanophotoniques et permet de transmettre, sous une forme TE, les deux composantes de polarisations perpendiculaires du faisceau circulant dans la fibre optique aux guides d'ondes. Un tel dispositif a plusieurs inconvénients. En particulier, la nécessité de positionner la fibre optique orthogonalement au plan principal du circuit entraîne des montages encombrants.

Le document US 2004/0184156 A1 propose également un réseau bidimensionnel avec une fibre formant un angle par rapport au réseau.

### Résumé

Il existe donc un besoin d'un dispositif permettant de séparer des polarisations perpendiculaires d'un faisceau circulant dans une fibre optique en vue de leur fourniture à un composant nanophotonique, ce dispositif ayant une épaisseur faible.

Ainsi, un mode de réalisation de la présente invention prévoit un dispositif de couplage entre une fibre optique et un composant nanophotonique formé sur un premier support, le dispositif comportant :
un composant intermédiaire formé sur un second support, comprenant un premier guide d'ondes adapté à recevoir la lumière de la fibre optique et à la transmettre à un premier réseau de diffraction quelle que soit la polarisation de la lumière incidente ;
des deuxième et troisième réseaux de diffraction formés sur le premier support et couplés au composant nanophotonique,
le premier réseau de diffraction étant adapté à fournir des premier et second faisceaux lumineux en direction, respectivement, du deuxième réseau de diffraction et du troisième réseau de diffraction, les premier et second faisceaux ayant des polarisations perpendiculaires.

Selon un mode de réalisation, les premier et second supports sont parallèles.

Selon un mode de réalisation, le premier guide d'ondes est un guide d'ondes à section sensiblement carrée.

Selon un mode de réalisation, le premier guide d'ondes a une section d'au moins du même ordre de grandeur que la section du coeur de la fibre.

Selon un mode de réalisation, le dispositif comprend en outre un système d'adaptation entre la fibre optique et le premier guide d'ondes.

Selon un mode de réalisation, des composants de traitement optique intégrés sont formés sur le composant intermédiaire au niveau du premier guide d'ondes.

Selon un mode de réalisation, les premier et second supports sont séparés d'une distance comprise entre 20 et 150 µm, de préférence entre 30 et 70 µm.

Selon un mode de réalisation, les premier et second supports sont fixés l'un à l'autre avec interposition d'espaceurs.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1, précédemment décrite, illustre le comportement d'un faisceau lumineux dans un guide d'ondes nanophotonique ;
la figure 2, précédemment décrite, illustre la propagation de faisceaux lumineux de différentes polarisations dans un guide d'ondes nanophotonique ;
la figure 3 illustre, en perspective, un dispositif selon un mode de réalisation de la présente invention ;
la figure 4 est une vue de côté du dispositif de la figure 3 ; et
la figure 5 illustre la connexion entre un composant de couplage intermédiaire selon un mode de réalisation de la présente invention et un support d'un composant nanophotonique.

Par souci de clarté, de mêmes éléments ont été désignés par de mêmes références aux différentes figures et, de plus, les diverses figures ne sont pas tracées à l'échelle.

### Description détaillée

Pour résoudre les problèmes susmentionnés d'adaptation de polarisation et de taille entre une fibre optique et un composant nanophotonique, la présente description propose d'utiliser, entre ces éléments, un composant intermédiaire permettant un couplage à faibles pertes entre le coeur de la fibre et des réseaux de diffraction formés sur le support du composant nanophotonique, le composant intermédiaire étant formé dans un plan parallèle à celui du support du composant nanophotonique.

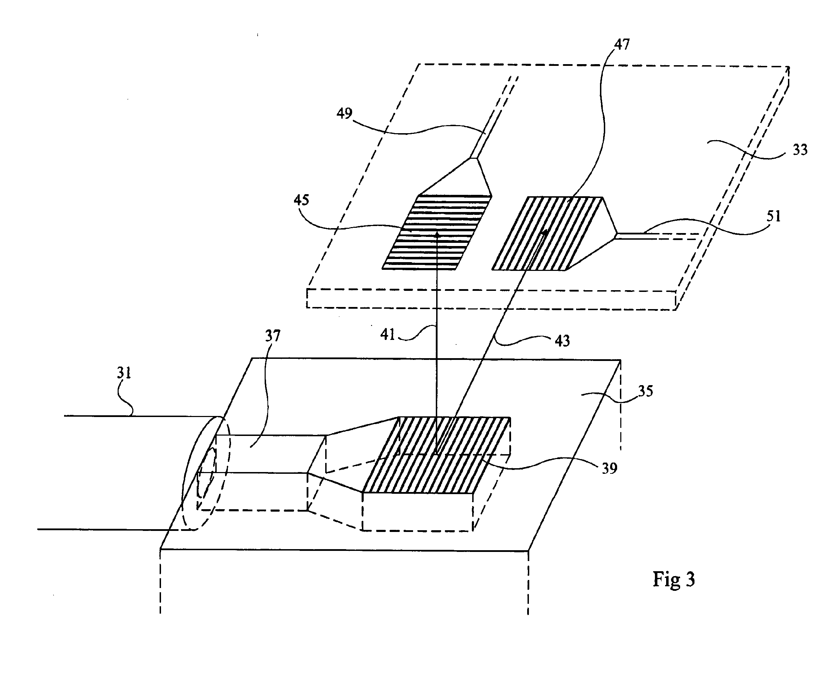

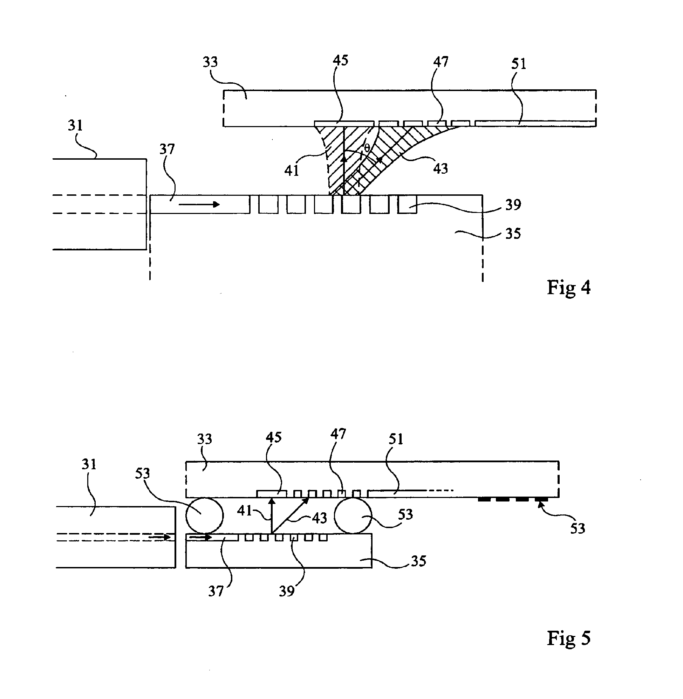

La figure 3 illustre, en perspective, un dispositif selon un mode de réalisation de la présente invention permettant le couplage entre une fibre optique et un guide d'ondes nanophotonique. La figure 4 est une vue de côté du dispositif de la figure 3.

On souhaite coupler une fibre optique 31 dont le coeur a un diamètre compris entre 3 et 10 µm à un composant nanophotonique (non représenté) formé dans et sur un support 33, ce composant nanophotonique comprenant des guides d'ondes dont les dimensions sont nettement inférieures au diamètre du coeur de la fibre, par exemple de 0,2 x 0,5 µm².

Un composant intermédiaire de couplage est formé sur un support 35 parallèle au support 33 du composant nanophotonique. Le composant intermédiaire comprend un guide d'ondes' d'entrée 37 et un réseau de diffraction 39 formés en surface du support 35. Le coeur de la fibre optique 31 est positionné de façon à éclairer le guide d'ondes d'entrée 37. Le guide d'ondes d'entrée 37 est dimensionné de façon à être peu sensible à la polarisation du faisceau fourni par la fibre optique 31 pour transmettre entièrement ce faisceau. Pour cela, chaque dimension du guide d'ondes 37 est supérieure ou égale à la longueur d'ondes de la lumière que l'on veut transmettre. Dans l'exemple représenté, le guide d'ondes 37 est à section carrée et de côté égal au diamètre du coeur de la fibre optique. Ainsi, le faisceau lumineux transporté par la fibre optique 31 est entièrement transmis au guide d'ondes et transporté par celui-ci.

A titre de variante, le diamètre de la fibre optique 31 pourra être supérieur aux dimensions du guide d'ondes. Dans ce cas, on prévoira une structure d'adaptation en entrée du composant intermédiaire, par exemple un adaptateur de taille de type "taper". Il s'agit d'une structure 2D ou 3D qui élargit les dimensions du guide d'ondes d'entrée 37 au bord du support 35. Le guide d'ondes 37 pourra avoir une section de 3 x 3 µm², de 8 x 6 µm² ou de 10 x 10 µm², selon la longueur d'ondes optiques à traiter.

Le faisceau lumineux transporté par la fibre optique 31 est donc entièrement fourni par le guide d'ondes 37 au réseau de diffraction 39. A titre d'exemple, le guide d'ondes 37 peut être formé d'une bande de silicium qui s'étend sur une couche isolante en surface du support 35. Le réseau de diffraction 39 peut être formé de créneaux de silicium. Une couche isolante, non représentée, s'étend sur le support 35 du composant intermédiaire au-dessus du guide d'ondes 37 et du réseau de diffraction 39.

Le réseau de diffraction 39 reçoit la lumière du guide d'ondes 37 et fournit deux faisceaux lumineux 41 et 43 dont seules les directions sont indiquées en figure 3. Les faisceaux lumineux 41 et 43 ont des directions sensiblement perpendiculaires à la surface du support 35. Chacun des faisceaux 41 et 43 correspond à une des deux polarisations perpendiculaires TE ou TM circulant dans le guide d'ondes d'entrée 37.

Comme on le voit mieux en figure 4, on prévoit le réseau de diffraction 39 de façon que le faisceau 41 se dirige vers le support 33 du composant nanophotonique en suivant une direction perpendiculaire au support du composant intermédiaire 35 et que le faisceau 43 se dirige vers le support 33 du composant nanophotonique en suivant une direction formant un angle θ avec la direction du faisceau 41. Les faisceaux 41 et 43 se séparent entre le composant intermédiaire et le support du composant nanophotonique. Pour éviter le chevauchement entre les faisceaux 41 et 43 au niveau du support 33, le réseau de diffraction 39 est prévu de façon que l'angle θ soit suffisant. Par exemple, si le diamètre des faisceaux 41 et 43 en sortie du composant intermédiaire est de 10 µm et si la distance entre les composants nanophotonique et intermédiaire est de 50 µm, le diamètre des faisceaux 41 et 43 au niveau du support 33 est d'environ 13,8 µm. Dans ce cas, un angle θ de 20° est suffisant pour éviter le chevauchement entre les faisceaux 41 et 43 au niveau du support 33. A titre d'exemple, la distance entre le support du composant intermédiaire 35 et le support 33 du composant nanophotonique peut être comprise entre 20 et 150 µm, de préférence entre 30 et 70 µm.

Sur la face inférieure du support 33 du composant nanophotonique, tournés vers le composant intermédiaire 35, sont prévus deux réseaux de diffraction 45 et 47. Les réseaux de diffraction 45 et 47 sont couplés, respectivement, à des guides d'ondes nanophotoniques 49 et 51, eux-mêmes couplés au composant nanophotonique. Le composant nanophotonique peut ainsi recevoir des ondes lumineuses provenant des guides d'ondes nanophotoniques. Les réseaux de diffraction 45 et 47 et les guides d'ondes associés 49 et 51 ont des directions, en surface du support 33, perpendiculaires. Les réseaux de diffraction 45 et 47 sont placés sur le support 33 de façon que le faisceau 41 atteigne le réseau de diffraction 45 et que le faisceau 43 atteigne le réseau de diffraction 47.

Le dispositif des figures 3 et 4 fonctionne comme suit. Le faisceau lumineux circulant dans le guide d'ondes 37 comprend deux composantes de polarisations perpendiculaires TE et TM. La composante de polarisation TE est transmise par le réseau de diffraction 39 au réseau de diffraction 47 (faisceau 43) et la composante de polarisation TM est transmise par le réseau de diffraction 39 au réseau de diffraction 45 (faisceau 41). Du fait du positionnement perpendiculaire des réseaux de diffraction 45 et 47 en surface du composant nanophotonique, les réseaux 45 et 47 fournissent des faisceaux de polarisation TE à leurs guides d'ondes associés, respectivement 49 et 51. Chaque guide d'ondes 49 et 51 fournit ensuite les faisceaux de polarisation TE à des composants ou éléments nanophotoniques (non représentés) formés sur le support 33.

La figure 5 illustre une connexion entre le composant intermédiaire selon un mode de réalisation de la présente invention et le support du composant nanophotonique.

Dans cette figure, on retrouve les éléments des figures 3 et 4, à savoir la fibre optique 31, le support du composant nanophotonique 33 et le support du composant intermédiaire 35. Cette figure illustre un exemple de connexion possible entre les supports 33 et 35 permettant de conserver une distance constante entre ces supports. Dans l'exemple représenté, les supports 33 et 35 sont maintenus l'un par rapport à l'autre par l'intermédiaire d'espaceurs 53, par exemple des billes. Comme on l'a vu précédemment, les billes pourront avoir un diamètre de l'ordre de quelques dizaines de micromètres, par exemple de 50 µm. De nombreux procédés permettant de former de telles billes sont connus.

On pourra également prévoir tout dispositif de fixation connu entre les supports 33 et 35 permettant d'assurer une distance constante entre ces supports. Comme cela est représenté en figure 5 pour illustration, des composants électroniques pourront également être formés sur le support 33 et des plots de contact conducteurs 53 pourront être formés sur la face inférieure du support 33 pour la connexion des composants électroniques à des éléments extérieurs au dispositif.

Dans les figures 3 à 5, les guides d'ondes 37, 49 et 51 ont été représentés comme étant des guides d'ondes de type ruban (ruban de silicium entouré d'oxyde de silicium). On notera que tout autre type de guide d'ondes connu pourra être utilisé pour les guides 37, 49 et 51. Par exemple, on pourra prévoir d'utiliser des guides ayant une forme d'arête.

De même, les réseaux de diffraction 39, 45 et 47 pourront avoir toute structure connue. Pour améliorer le taux de couplage entre les réseaux de diffraction 39 et 45/47, on pourra former des structures réfléchissantes au niveau de ces réseaux. Par exemple, on pourra prévoir d'ajouter des miroirs de Bragg, des miroirs métalliques, ou encore des cristaux photoniques sous et/ou sur les réseaux de diffraction 39, 45 et 47.

De nombreux procédés de fabrication de guide d'ondes et de réseaux de diffraction sur des supports semiconducteurs sont connus. Par exemple, on peut prévoir d'utiliser un substrat de type silicium sur isolant (SOI), de faire une première photolithogravure du silicium pour former les bandes du réseau de diffraction puis de réaliser une seconde photolithogravure pour définir le contour des guides d'ondes et des réseaux de diffraction. On forme ensuite une couche isolante sur la structure. Les guides d'ondes optiques peuvent également être formés en surface d'une couche isolante par écriture au laser dans un matériau semiconducteur formé sur la couche isolante, ou par implantation.

Ainsi, un mode de réalisation de la présente invention propose un dispositif très peu sensible à la polarisation. L'atténuation entre les deux faisceaux 41 et 43 est typiquement inférieure à 1 ou 2 dB. De plus, le dispositif a l'avantage d'avoir une épaisseur faible puisque l'introduction de la lumière par la fibre optique se fait par la tranche du composant intermédiaire. Ainsi, le dispositif présenté ici peut être prévu dans des structures de faible épaisseur.

Des modes de réalisation particuliers de la présente invention ont été décrits. Diverses variantes et modifications apparaîtront à l'homme de l'art. En particulier, on pourra prévoir de réaliser des traitements optiques également au niveau du composant intermédiaire. Pour cela, des composants de traitement optique intégrés sont formés au niveau du guide 37, entre l'entrée du guide 37 et le réseau de diffraction 39. Les traitements optiques réalisés dans de tels composants sont des traitements qui ne dépendent pas de la polarisation du faisceau lumineux circulant dans le guide, par exemple un multiplexage spectral, un démultiplexage spectral ou un filtrage spectral. Ainsi, on pourra réaliser des fonctions peu dépendantes de la polarisation au niveau du composant intermédiaire et des fonctions dépendantes de la polarisation au niveau du composant nanophotonique.

A titre de variante, on pourra également prévoir un dispositif de couplage symétrique du dispositif de la figure 3, c'est-à-dire un dispositif permettant de coupler une sortie d'un composant nanophotonique à une fibre optique. Dans ce cas, des faisceaux adaptés circulant dans des guides d'ondes nanophotoniques seront transmis, par l'intermédiaire de réseaux de diffraction formés sur le support du circuit nanophotonique, vers un réseau de diffraction formé dans un composant intermédiaire. Le réseau de diffraction du composant intermédiaire sera couplé à un guide d'ondes peu sensible à la polarisation adapté à fournir un faisceau lumineux de sortie en direction d'une fibre optique.

## Revendications

1. Dispositif de couplage entre une fibre optique (31) et un composant nanophotonique formé sur un premier support (33), le dispositif comportant :
un composant intermédiaire formé sur un second support (35), comprenant un premier guide d'ondes (37) et un premier réseau de diffraction le premier guide d'ondes étant adapté à recevoir la lumière de la fibre optique et à la transmettre à un premier réseau de diffraction (39) quelle que soit la polarisation de la lumière incidente ;
des deuxième et troisième réseaux de diffraction (45, 47) formés sur le premier support et couplés au composant nanophotonique,
le premier réseau de diffraction (39) étant adapté à fournir des premier (41) et second (43) faisceaux lumineux en direction, respectivement, du deuxième réseau de diffraction (45) et du troisième réseau de diffraction (47), les premier et second faisceaux ayant des polarisations perpendiculaires.

2. Dispositif selon la revendication 1, dans lequel les premier et second supports (33, 35) sont parallèles.

3. Dispositif selon la revendication 1 ou 2, dans lequel le premier guide d'ondes (37) est un guide d'ondes à section sensiblement carrée.

4. Dispositif selon l'une quelconque des revendications 1 à 3, dans lequel le premier guide d'ondes (37) a une section d'au moins du même ordre de grandeur que la section du coeur de la fibre.

5. Dispositif selon l'une quelconque des revendications 1 à 4, comprenant en outre un système d'adaptation entre la fibre optique (31) et le premier guide d'ondes (37).

6. Dispositif selon l'une quelconque des revendications 1 à 5, dans lequel des composants de traitement optique intégrés sont formés sur le composant intermédiaire au niveau du premier guide d'ondes (37).

7. Dispositif selon l'une quelconque des revendications 1 à 6, dans lequel les premier et second supports (33, 35) sont séparés d'une distance comprise entre 20 et 150 µm, de préférence entre 30 et 70 µm.

8. Dispositif selon l'une quelconque des revendications 1 à 7, dans lequel les premier et second supports (33, 35) sont fixés l'un à l'autre avec interposition d'espaceurs.

## Patentansprüche

1. Eine Einrichtung zum Ankoppeln einer optischen Faser (31) mit einer Nanophotokomponente, die auf einer ersten Auflage (33) ausgebildet ist, wobei die Einrichtung Folgendes aufweist:
eine Zwischenkomponente, die auf einer zweiten Auflage (35) ausgebildet ist, die einen ersten Wellenleiter (37) und ein erstes Diffraktionsgitter aufweist, wobei der erste Wellenleiter zum Empfangen des Lichts von der optischen Faser und zum Senden des Lichts an das erste Diffraktionsgitter (39) geeignet ist, und zwar unabhängig von der Polarisation des einfallenden Lichts;
zweite und dritte Diffraktionsgitter (45, 47), die auf der ersten Unterstützung ausgebildet sind und an die Nanophotokomponente angekoppelt sind,
das erste Diffraktionsgitter (39) ist geeignet, erste (41) und zweite (43) Lichtstrahlen entsprechend an das zweite Diffraktionsgitter (45) und dritte Diffraktionsgitter (47) zu liefern, wobei die ersten und zweiten Strahlen lotrechte Polarisationen haben.

2. Einrichtung nach Anspruch 1, wobei die ersten und zweiten Auflagen (33, 35) parallel sind.

3. Einrichtung nach Anspruch 1 oder 2, wobei der erste Wellenleiter (37) ein Wellenleiter mit im wesentlichen Rechteckquerschnitt ist.

4. Einrichtung nach irgendeinem der Ansprüche 1 bis 3, wobei der erste Wellenleiter (37) einen Querschnitt von mindestens der gleichen Größenordnung wie der Querschnitt der Faser hat.

5. Einrichtung nach irgendeinem der Ansprüche 1 bis 4, die ferner ein Adaptersystem zwischen der optischen Faser (31) und dem ersten Wellenleiter (37) aufweist.

6. Einrichtung nach irgendeinem der Ansprüche 1 bis 5, wobei integrierte optische Verarbeitungskomponenten auf der Zwischenkomponente auf der Ebene des ersten Wellenleiters (37) ausgebildet sind.

7. Einrichtung nach irgendeinem der Ansprüche 1 bis 6, wobei die ersten und zweiten Auflagen (33, 35) durch eine Distanz getrennt sind, die zwischen 20 und 150 µm, bevorzugt zwischen 30 und 70 µs liegt.

8. Einrichtung nach irgendeinem der Ansprüche 1 bis 7, wobei die ersten und zweiten Auflagen (33, 35) aneinander mit dazwischengestellten Abstandshaltern befestigt sind.

## Claims

1. A device for coupling an optical fiber (31) with a nanophotonic component formed on a first support (33), the device comprising:
an intermediary component formed on a second support (35), comprising a first waveguide (37) and a first diffraction grating, the first waveguide being capable of receiving the light from the optical fiber and of transmitting it to the first diffraction grating (39) whatever the polarization of the incident light;
second and third diffraction gratings (45, 47) formed on the first support and coupled to the nanophotonic component,
the first diffraction grating (39) being capable of delivering first (41) and second (43) light beams towards, respectively, the second diffraction grating (45) and the third diffraction grating (47), the first and second beams having perpendicular polarizations.

2. The device of claim 1, wherein the first and second supports (33, 35) are parallel.

3. The device of claim 1 or 2, wherein the first waveguide (37) is a waveguide of substantially square cross-section.

4. The device of any of claims 1 to 3, wherein the first waveguide (37) has a cross-section of at least the same order of magnitude as the cross-section of the fiber core.

5. The device of any of claims 1 to 4, further comprising an adapter system between the optical fiber (31) and the first waveguide (37).

6. The device of any of claims 1 to 5, wherein integrated optical processing components are formed on the intermediary component at the level of the first waveguide (37).

7. The device of any of claims 1 to 6, wherein the first and second supports (33, 35) are separated by a distance ranging between 20 and 150 µm, preferably between 30 and 70 µm.

8. The device of any of claims 1 to 7, wherein the first and second supports (33, 35) are attached to each other, with interposed spacers.
